# EUROPÄISCHE PATENTSCHRIFT

(11) **EP 0 421 165 B1**
(45) Veröffentlichungstag und Bekanntmachung des Hinweises auf die Patenterteilung: **02.06.1993**
(21) Anmeldenummer: 90117617.2
(22) Anmeldetag: 13.09.1990
(51) Int. Cl.: G01G 11/00, G01G 11/14, G01G 23/14

(54) **Verfahren zum Tarieren einer Dosierbandwaage**
Method for taring a conveyor-type dispensing scale
Procédé de tarage d'une bascule à bande transporteuse de dosage

(30) Priorität: 06.10.1989 DE 3933424
(43) Veröffentlichungstag der Anmeldung: 10.04.1991
(73) Patentinhaber: CARL SCHENCK AG, D-64273 Darmstadt (DE)
(72) Erfinder: Jost, Gerhard, Dr., D-6109 Mühltal (DE)

(56) Entgegenhaltungen:
- DD-A- 232 547
- DE-B- 2 365 524
- FR-A- 2 241 773
- US-A- 3 976 150

## Beschreibung

Die Erfindung betrifft ein Verfahren zum Tarieren einer Dosierbandwaage mit kontinuierlicher Dosiergutaufgabe, bei der ein von einer Wägezelle erzeugtes Wägesignal und ein von einer Sensoreinrichtung erzeugtes Bandumlaufsignal einer Tariereinrichtung zugeführt werden, die das Wägesignal bandabschnittsweise erfaßt und um den einem Bandabschnitt jeweils zugeordneten, örtlichen Bandeinfluß korrigiert.

Dosierbandwaagen sind spezielle Bandförderer, mit denen Schüttgüter einem Prozeß mit einer einstellbaren Förderstärke zudosiert werden können. Zur Erfassung der Förderstärke wird die Belastung und die Geschwindigkeit des Bandes gemessen. Das Produkt aus der Nettobandbelastung und der Bandgeschwindigkeit entspricht der Förderstärke, die dosiert und damit geregelt werden soll. Die als Wägesignal gemessene Bandbelastung setzt sich aus dem vom Schüttgut herrührenden Anteil, der Bandbeladung, und dem aus dem Gewicht und den Verformungskräften des Bandes herrührenden Bandeinfluß zusammen. Betrachtet man einen kompletten Bandumlauf, so läßt sich der Bandeinfluß darüber mitteln und das Bandbelastungssignal um diesen Mittelwert korrigieren. Man erhält dann als Nettowert die Bandbeladung, die dem Schüttgut auf dem Band pro Bandumlauf entspricht.

Für eine Reihe moderner Produktionsverfahren, insbesondere im Bereich der chemischen Industrie, ist eine Dosierkonstanz, d. h. eine Konstanz der Förderstärke an der Abwurfkante des Bandes erforderlich, die durch eine auf ganzzahlige Bandumläufe bezogene Korrektur des Bandeinflußes nicht erreicht werden kann, da der Bandeinfluß lediglich im Mittel konstant ist, während eines Bandumlaufs aber erheblichen Schwankungen unterliegt. Um diese Schwankungen des Bandeinflußes bei der Tarakorrektur berücksichtigen zu können, ist es bekannt, die Bandeinflußgrößen bei unbeladenem Band in Zuordnung zu einzelnen Bandabschnitten zu ermitteln und zu speichern. Während des anschließenden Wägeverfahrens werden die abschnittsweise ermittelten Bandeinflußgrößen zuordnungsgenau von den für die entsprechenden Abschnitte ermittelten Wägesignalen subtrahiert, so daß man für jeden Bandabschnitt ein um den örtlichen Bandeinfluß reduziertes Netto-Bandbelastungssignal erhält. Dieses bekannte Verfahren führt jedoch nicht zu der gewünschten Dosiergenauigkeit, da der Verlauf der Bandeinflußfunktion nicht eindeutig ist. Der Bandeinfluß wird vielmehr ganz erheblich von der Betriebsweise der Dosierbandwaage, von der Laufdauer und von der Bandtemperatur bestimmt und ist deshalb langsamen zeitlichen Änderungen unterworden, die durch das bekannte Verfahren nicht erfaßt und ausgeglichen werden können.

Aufgabe der Erfindung ist es, ein Verfahren zum Tarieren einer Dosierbandwaage der eingangs genannten Art anzugeben, das während des kontinuierlichen Wägevorgangs den sich ändernden Bandeinfluß erfaßt und bei der Korrektur berücksichtigt.

Die Aufgabe wird erfindungsgemäß dadurch gelöst, daß durch die Tariereinrichtung aus den Wägesignalen einer statistisch relevanten Zahl von Bandumläufen ein Mittelwert gebildet wird, der mit aus den bandabschnittsweise aufsummierten Wägesignalen dieser Bandumläufe gebildeten, den einzelnen Bandabschnitten zugeordneten Mittelwerten verglichen wird und daß aus den sich daraus ergebenden Differenzwerten Tariersignale zur Korrektur des örtlichen Bandeinflußes des folgenden Bandumlaufs gebildet werden.

Das erfindungsgemäße Verfahren beruht auf der Tatsache, daß sich die Bandbeladung und der Bandeinfluß in ihrem statistischen Verhalten wesentlich voneinander unterscheiden. Der Bandeinfluß ist ortsabhängig und aufgrund der physikalischen Natur seiner Einflußgrößen langsamen zeitlichen Änderungen unterworfen, er bildet also ein quasi-stationäres Signal. Die Schwankungen der Bandbeladung mit Dosiergut haben hingegen rein stochastischen Charakter und sind daher über mehrere Bandumläufe betrachtet in jedem Bandabschnitt in ihrem Mittelwert konstant. Durch das erfindungsgemäße Verfahren lassen sich daher aus dem Wägesignal die örtlichen Bandeinflußgrößen herausfiltern und zur bandabschnittsweisen Tarierung des Bandeinflußes verwenden. Langsame zeitliche Änderungen des Bandeinflußes werden somit erfaßt und bei der Tarierung berücksichtigt. Das erfindungsgemäße Verfahren ermöglicht damit eine hohe bandabschnittsweise Dosiergenauigkeit, die durch Änderungen des Bandeinflusses nicht beeinträchtigt wird.

Bei dem erfindungsgemäßen Verfahren kann weiterhin vorgesehen sein, daß zur Bildung der den einzelnen Bandabschnitten zugeordeten Tariersignale von den bandabschnittsweise erfaßten Wägesignalen eines Bandumlaufs jeweils der Mittelwert der aufsummierten Wägesignale des Bandumlaufs subtrahiert wird und daß aus den derart gebildeten Differenzwerten einer statistisch relevanten Zahl von Bandumläufen bandabschnittsweise als Tariersignal dienende Mittelwerte gebildet werden. Eine derartige Verarbeitung der Wägesignale ermöglicht einen einfachen Aufbau der Tariereinrichtung. Erfindungsgemäß kann weiterhin vorgesehen sein, daß die von der Tariereinrichtung verarbeiteten Wägesignale um die bei unbeladenem Band ermittelte durchschnittliche Bandeinflußgröße vermindert sind. Hierbei wird zu Beginn eines kontinuierlichen Wägevorgangs die Dosierbandwaage in unbeladenem Zustand derart tariert, daß der Durchschnitt der Wägesignale bereits der durchschnittlichen Netto-Bandbeladung entspricht.

Die Erfindung wird nachfolgend an Hand einem Beispiel näher erläutert, das in der Zeichnung dargestellt ist. Es zeigen
- Figur 1: eine schematische Darstellung einer Dosierbandwaage mit Tariereinrichtung und
- Figur 2: die Wägesignale mehrerer Bandumläufe eines kontinuierlichen Wägevorgangs und das daraus abgeleitete Tariersignal.

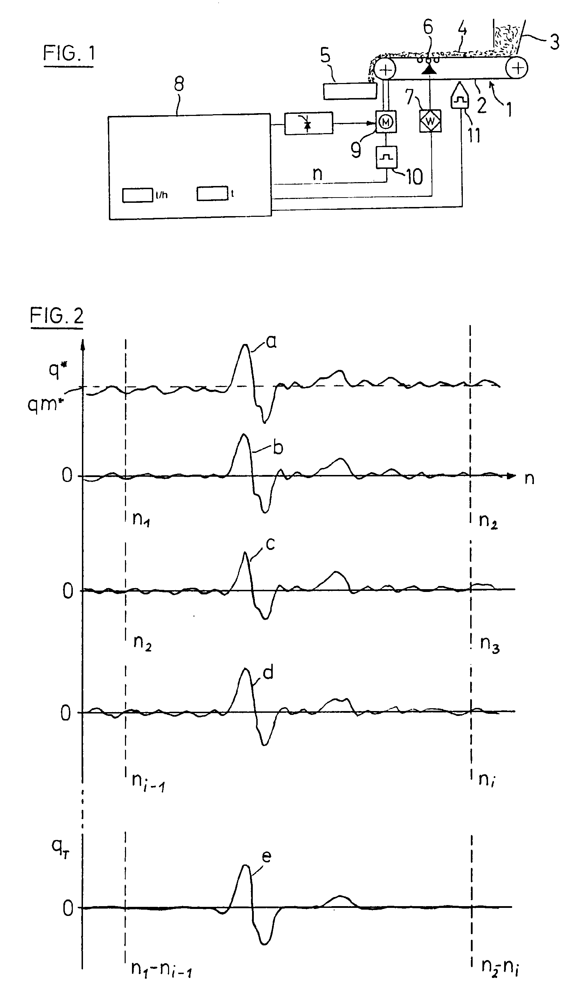

In Figur 1 ist der prinzipielle Aufbau einer Dosierbandwaage 1 dargestellt. Ein um zwei Trommeln umlaufendes Band 2 entnimmt aus einem Aufgabetrichter 3 ein Dosiergut 4 und führt es in dosierter Förderstärke einem Prozeßbehälter 5 zu. Das Band läuft über eine Wägerolle 6, die von einer Wägezelle 7 getragen wird. Von der Wägezelle 7 wird ein Wägesignal q an eine elektronische Regeleinrichtung 8 übertragen. Zum Antrieb des Bandes 2 ist ein regelbarer Motor 9 vorgesehen, dessen Drehweg von einem Signalgeber 10 zur Bildung eines Bandumlaufsignals n erfaßt und ebenfalls der Regeleinrichtung 8 übermittelt wird. Ein weiterer Signalgeber 11 am Band 2 übermittelt ein Syncronsignal pro Bandumlauf an die Regeleinrichtung 8. In der Regeleinrichtung 8 wird aus dem Wägesignal q und der aus dem Drehweg errechneten Bandgeschwindigkeit die Istförderstärke des Dosierguts kontinuierlich ermittelt und aufgrund eines Vergleichs mit der eingestellten Sollförderstärke durch Steuerung des Motors 9 die Bandgeschwindigkeit so geregelt, daß die dem Prozeßbehälter 5 zugeführte Förderstärke des Dosierguts genau der gewünschten Sollförderstärke entspricht.

Um die Istförderstärke aus dem Wägesignal q der Wägezelle 7 ermitteln zu können, ist die Regeleinrichtung 8 mit einer Tariereinrichtung versehen, die die in dem Wägesignal q enthaltene Bandeinflußgröße ermittelt und das Wägesignal q entsprechend korrigiert. Zur Durchführung dieser Korrektur wird zunächst bei unbeladenem Band der Mittelwert des Bandeinflusses pro Bandumlauf ermittelt und gespeichert. Dieser Mittelwert wird bei dem anschließenden kontinuierlichen Wägevorgang durch die Tariereinrichtung von den bandabschnittsweise erfaßten Wägesignalen q subtrahiert, wodurch vortarierte Wägesignale q* gebildet werden, welche sich aus der örtlichen Bandbeladung und den örtlichen Abweichungen der Bandeinflußgröße von dem Mittelwert des Bandeinflusses zusammensetzen. Mit Hilfe des von den Signalgebern 10, 11 gebildeten Bandumlaufsignals n werden die vortarierten Wägesignale q* in Zuordnung zu dem jeweils gewogenen Bandabschnitt aufgezeichnet, so daß sich der Verlauf der Wägesignale q* über einen Bandumlauf n₁-n₂, wie in Figur 2, Kurve a darstellen läßt. Die Wägesignale q* eines Bandumlaufs n₁-n₂ werden nach Abzug des aus ihrer Summe gebildeten Mittelwerts qm* bandabschnittsweise gespeichert und über eine statistisch relevante Zahl von Bandumläufen n₁-nᵢ bandabschnittsweise summiert. Die Kurven b bis d geben den typischen Verlauf der gespeicherten Signalkurven aufeinanderfolgender Bandumläufe wieder. Ist die zur Auswertung erforderliche Zahl von Bandumläufen erreicht, so werden aus den für die einzelnen Bandabschnitte aufsummierten Signalen Mittelwerte gebildet, wodurch sich der als Kurve e dargestellte Signalverlauf ergibt. Es zeigt sich, daß der stochastischen Schwankungen unterworfene Bandbeladungsanteil des vortarierten Wägesignals q* durch die Signalverarbeitung zu Null wurde, während der quasi stationäre Bandeinfluß in seiner typischen Ausprägung erhalten geblieben ist. Der Signalverlauf gemäß Kurve e beinhaltet somit nur noch die Schwankungen der Bandeinflußgröße in den einzelnen Bandabschnitten und kann daher als Tariersignal q_{T} zur bandabschnitsweisen Korrektur des Wägesignals q* im folgenden Bandumlauf verwendet werden.

Die beschriebene Erfassung und Verarbeitung der Wägesignale q* wird von der Tariereinrichtung jeweils für eine festgelegte statistisch relevante Zahl von Bandumläufen durchgeführt, die dem augenblicklich tarierten Bandumlauf unmittelbar vorausgehen. Die zur Tarierung durchgeführte Signalerfassung beschränkt sich also immer auf einen begrenzten, der augenblicklichen Tarierung unmittelbar vorausgehenden Abschnitt des Wägevorgangs, so daß langsame zeitliche Veränderungen des Bandeinflusses erfaßt und bei der Tarierung berücksichtigt werden. Die beschriebene Verfahrensweise ermöglicht somit eine optimale, selbsttätige Korrektur des Bandeinflusses auch bei länger andauernden, kontinuierlichen Wägevorgängen.

## Patentansprüche

1. Verfahren zum Tarieren einer Dosierbandwaage mit kontinuierlicher Dosiergutaufgabe, bei der ein von einer Wägezelle erzeugtes Wägesignal und ein von einer Sensoreinrichtung erzeugtes Bandumlaufsignal einer Tariereinrichtung zugeführt werden, die das Wägesignal bandabschnittsweise erfaßt und um den dem jeweiligen Bandabschnitt zugeordneten, örtlichen Bandeinfluß korrigiert, dadurch gekennzeichnet, daß durch die Tariereinrichtung aus den Wägesignalen einer statistisch relevanten Zahl von Bandumläufen ein Mittelwert gebildet wird, der mit aus den bandabschnittsweise aufsummierten Wägesignalen dieser Bandumläufe gebildeten, den einzelnen Bandabschnitten zugeordneten Mittelwerten verglichen wird und daß aus den sich daraus ergebenden Differenzwerten Tariersignale zur Korrektur des örtlichen Bandeinflusses beim folgenden Bandumlauf gebildet werden.

2. Verfahren nach Anspruch 1, dadurch gekennzeichnet, daß von den bandabschnittsweise erfaßten Wägesignalen eines Bandumlaufs jeweils der Mittelwert der aufsummierten Wägesignale des Bandumlaufs subtrahiert wird und daß aus den derart gebildeten Differenzwerten einer statistisch relevanten Zahl von Bandumläufen bandabschnittsweise als Tariersignal dienende Mittelwerte gebildet werden.

3. Verfahren nach einem der Ansprüche 1 oder 2, dadurch gekennzeichnet, daß die von der Tariereinrichtung verarbeiteten Wägesignale um die bei unbeladenem Band ermittelte durchschnittliche Bandeinflußgröße vermindert sind.

## Claims

1. Method of taring a proportioning belt weigher with a continuous feed of material in measured quantities, in which a weighing signal generated by a weighing cell and a belt revolution signal generated by a sensor device are supplied to a taring device, which registers the weighing signal by belt section and corrects it by the local belt influence related to each belt section, characterized in that a mean value is formed by the taring device from the weighing signals of a statistically relevant number of belt revolutions, which is compared with mean values formed from the weighing signals of these belt revolutions added by belt section and related to the individual belt sections, and that from the difference values resulting therefrom taring signals are formed for correcting the local belt influence in the following belt revolution.

2. Method according to claim 1, characterized in that the mean value of the added weighing signals of the belt revolution is subtracted in each case from the weighing signals of a belt revolution registered by belt section, and that from the difference values thus formed of a statistically relevant number of belt revolutions, mean values used as a taring signal by belt section are formed.

3. Method according to one of claims 1 or 2, characterized in that the weighing signals processed by the taring device are reduced by the average magnitude of belt influence ascertained when the belt is unloaded.

## Revendications

1. Procédé de tarage d'une bascule à bande doseuse comprenant une alimentation continue de charge à doser, dans laquelle un signal de pesage, produit par une cellule de pesage, et un signal de rotation de la bande généré par un dispositif capteur sont amenés à un dispositif de tarage qui détecte section de bande par section de bande le signal de tarage et le corrige de l'influence locale de la section de bande concernée, caractérisé en ce que par le dispositif de tarage, il est formé, à partir des signaux de pesage d'un nombre de rotations de la bande statistiquement représentatif, une valeur moyenne qui est comparée aux valeurs moyennes formées par les signaux de pesage additionnés section de bande par section de bande et correspondant à chacune desdites sections de bande, et en ce que les signaux de tarage sont formés à partir des valeurs différentielles qui en résultent, pour la correction de l'influence locale de la bande lors de la rotation suivante de la bande.

2. Procédé selon la revendication 1, caractérisé en ce que chacune des valeurs moyennes des signaux de pesage additionnés est soustrait des signaux de pesage saisis section de bande par section de bande d'une rotation de la bande intégrés de la rotation de la bande, et en ce qu'à partir des valeurs de différentielles d'un nombre de rotations de la bande statistiquement significatif ainsi obtenues , sont formées section de bande par section de bande des valeurs moyennes servant de signal de tarage.

3. Procédé selon les revendications 1 ou 2, caractérisé en ce que par les signaux de pesage traités par le dispositif de tarage sont diminuées de la valeur moyenne de l'influence de la bande déterminée sur la bande déchargée.
